Europäisches Patentamt

European Patent Office

Office européen des brevets

(19)

(11) Veröffentlichungsnummer : **0 379 680 B1**

(12) # EUROPÄISCHE PATENTSCHRIFT

(45) Veröffentlichungstag der Patentschrift :
23.12.92 Patentblatt 92/52

(51) Int. Cl.⁵ : **A47L 9/28**

(21) Anmeldenummer : 89122153.3

(22) Anmeldetag : 01.12.89

(54) **Vorrichtung zur automatischen Saugleistungssteuerung eines Staubsaugers.**

(30) Priorität : 21.01.89 DE 3901767
30.01.89 DE 3902647

(43) Veröffentlichungstag der Anmeldung :
01.08.90 Patentblatt 90/31

(45) Bekanntmachung des Hinweises auf die
Patenterteilung :
23.12.92 Patentblatt 92/52

(84) Benannte Vertragsstaaten :
AT BE CH DE ES FR GB GR IT LI LU NL SE

(56) Entgegenhaltungen :
DE-A- 3 117 507
GB-A- 2 016 910
US-A- 2 580 643
US-A- 2 789 660
US-A- 4 099 291

(73) Patentinhaber : **Interlava AG**
**Contrada di Sassello 2**
**CH-6900 Lugano 1 (CH)**

(72) Erfinder : **Kraft, Manfred**
**Schönbronner Strasse 10**
**W-7265 Neubulach (DE)**
Erfinder : **Kurz, Gerhard,**
**Bruckenäcker 11**
**W-7000 Stuttgart 80 (DE)**

(74) Vertreter : **Otte, Peter, Dipl.-Ing.**
**Tiroler Strasse 15**
**W-7250 Leonberg (DE)**

EP 0 379 680 B1

**Beschreibung**

Stand der Technik

Die Erfindung geht aus von einer Vorrichtung zur automatischen Saugleistungssteuerung eines Staubsaugers nach dem Oberbegriff des Anspruchs 1.

Eine bekannte Vorrichtung dieser Art (DE-PS 31 17 507) verfügt über einen im Unterdruckbereich des Staubsaugers angeordneten Unterdruckschalter, der so ausgebildet ist, daß mindestens zwei verschiedene, unterschiedliche Unterdrücke durch eine entsprechende Justierung erfaßt und einer Auswerteschaltung zugeführt werden können. Allerdings ist die konkrete Ausführungsform des bekannten Unterdruckschalters so realisiert, daß sich in Abhängigkeit zum einwirkenden Unterdruck drei elektrische Kontaktgaben zur Drehzahlsteuerung durch Umschaltung erzielen lassen, indem eine von einer Membran angetriebene Kontaktplatte mit ihrer Fläche einen unterschiedlichen Abstand zu Gegenkontaktstücken aufweist, die dann sukzessive je nach einwirkendem Unterdruck von der Kontaktplatte kontaktiert werden. Hierzu verkippt die Kontaktplatte, wobei der unterschiedliche Abstand durch eine entsprechende Justierung in Form einer axialen Verstellung der Gegenkontaktstücke eingestellt werden kann.

Diese unterschiedlichen Kontaktgaben ermöglichen beispielsweise die Aufschaltung (zusätzlicher) Widerstände im Ansteuerkreis für eine Phasenanschnittsteuerung, die auf den Gebläseantriebsmotor des Staubsaugers arbeitet. Auf diese Weise ist es möglich, eine solche Anzahl von unterschiedlichen Leistungsabstufungen für den Gebläseantriebsmotor vorzugeben, wie sich durch den oder die vorhandenen Unterdruckschalter Kontaktgaben bei unterschiedlichen Unterdrücken des Staubsaugers erzielen lassen. Hierzu und auch für die jeweilige Einzeljustierung der individuell auf einen jeweils zugeordneten Unterdruck ansprechenden Unterdruckschalter oder Unterdruckteilschalter ist ein erheblicher feinmechanischer Aufwand erforderlich, der durch die notwendigen Justierarbeiten noch verstärkt wird.

Es ist ferner bekannt, einen durch das Gebläse des Staubsaugers erzeugten Unterdrucks sich selbsttätig einstellenden Steuerschalter vorzusehen, der je nach Unterdruckwirkung entweder verschiedene Wicklungteile des das Gebläse antreibenden Elektromotors ansteuert oder entsprechende Vorwiderstände schaltet (DE-PS 573 224).

Da der Staubsauger, für den diese bekannte Steuerschaltung arbeitet, ein sogenannter Klopfsauger ist, bei dem das Gehäusevorderteil des Staubsaugers die Saugdüse über die gesamte Breite bildet und auch eine zusätzlich noch angetriebene Klopfwalze lagert, ist der Steuerschalter so ausgebildet, daß er eine sich über die gesamte Staubsaugerbreite im oberen Teil der Düse gelagerte Klappe oder Platte umfaßt, die durch den jeweils vorherrschenden Unterdruck um einen Schwenkpunkt verdrehbar ist und über ein Gestänge einen Schaltarm des Steuerschalters so verschwenkt, daß die Umschaltungen zwischen den Wicklungen oder Widerständen möglich sind. Damit die Steuerklappe auf sich ändernde Unterdrücke reagieren kann, sind noch balgartige Dichtungen beidseitig vorgesehen. Bei einem solchen bekannten Steuerschalter könnte als nachteilig angesehen werden, daß der unterdruckempfindliche Bereich in seinen Abmessungen jedenfalls in der Breite praktisch so groß wie das ganze Staubsaugergehäuse ist und die Umschaltungen in der Saugleistungssteuerung nur mit erheblichem Kraftaufwand über ein mechanisches Gestänge erfolgen können, an dessen kinematischem Endbereich ein federvorgespannter Sprungschalter dann schlagartig in einen anderen Schaltzustand übergeht. Die bekannte Vorrichtung kann auf nur geringe Unterdruckunterschiede nicht feinfühlig genug reagieren - außerdem besteht die Möglichkeit, daß das ganze automatische Steuersystem sehr rasch deshalb unbrauchbar wird, weil es im unmittelbaren Ansaugbereich der Schmutzpartikel angeordnet ist, die die Tendenz besitzen, sich überall festzusetzen und die erforderlichen Verschiebebewegungen für die Umschaltungen stark hemmen oder ganz unterdrücken können.

Ferner ist aus der DE-OS 28 19 193 ein Staubsauger mit einer Drehzahlregleinrichtung für das Gebläseaggregat bekannt, bei dem ein Stellglied für den Regelkreis des Gebläsemotors auf den vom Gebläse erzeugten Unterdruck im Betrieb reagiert. Das Stellglied umfaßt einen Saugkolben in einem zylindrischen, mit einem Unterdruckanschluß verbundenen Gehäuse, wobei die Kolbenstange des Saugkolbens mit einem Schiebewiderstand gekoppelt ist, der seinerseits Teil des Regelkreises für die Motoransteuerung ist. Hierdurch ergibt sich zwar eine analoge Beeinflussungsmöglichkeit für die Gebläsemotorsteuerung, andererseits aber auch die Notwendigkeit, erhebliche Unterdrücke zur Verfügung zu stellen, um die stark durch Reibung beeinflußten Stellbewegungen des Kolbens in seiner Zylinderführung und die Gleitbewegung des Schiebewiderstandsabgriffs überhaupt zu ermöglichen. Die bei Staubsaugern etwa in Abhängigkeit zum Staubbeutelfüllungsgrad auftretenden Unterdruckschwankungen sind jedoch zum Teil äußerst gering und lassen sich so nicht zur Begläsesteuerung ausnutzen.

Aus dem DE-GM 80 00 772 ergibt sich eine Möglichkeit zur manuell beeinflußbaren Saugleistungssteuerung bei einem elektrischen Staubsauger, die darin besteht, daß entweder mehrere Unterdruckschalter mit jeweils unterschiedlichen Umschaltwerten vorgesehen sein sollen, so daß die Leistung des Motors noch in weitere Leistungsstufen aufgeteilt werden kann, oder bei einem vorhandenen Unterdruckschalter noch weitere Schaltstellungen anzuordnen. Wie hierzu allerdings vorzugehen ist, läßt sich nicht entnehmen, wobei besonders bedenklich ist, daß bei der Anordnung mehrerer Unterdruckschalter notgedrungen immer der mit dem höchsten Empfindlichkeitswert sämtliche Umschaltungen aufgrund von Unterdruckschwankungen mitmacht und daher, jedenfalls nicht auf diese nur allgemein umrissene Weise, bei unterschiedlichen Unterdruckwerten bestimmte Umschaltungen vorgenommen werden können. Als nachteilig könnte noch angesehen werden, daß der mindestens eine vorgesehene Unterdruckschalter ein extremes Hystereseverhalten aufweisen muß, um bei einer von Hand bewirkten Unterdruckschwankung, etwa Verschliessen der Ansaugleitung, die hierdurch hervorgerufene Umschaltung auch bei einer späteren Öffnung der Saugleitung noch beizubehalten. Andererseits ist in dieser Veröffentlichung aber auch angemerkt, daß bei vollständiger Freigabe der Saugleitung wiederum die Rückschaltung erfolgt.

Eine weitere manuelle Saugleistungssteuerung eines Staubsaugers ergibt sich als bekannt aus der DE-PS 33 07 002, wobei ebenfalls mindestens zwei, jeweils auf unterschiedliche Ansprechwerte, also Empfindlichkeiten justierte Membranschalter im Unterdruckbereich des Staubsaugers angeordnet sind. Dabei sind die Membranschalter so ausgebildet, daß sie auf impulsartig auftretende, also durch manuell bewußt herbeigeführtes Verschließen der Ansaugleitung hervorgerufene Unterdruckschwankungen ansprechen, so daß eine nachgeordnete Drehzahlsteuerschaltung in die Lage versetzt wird, beispielsweise zwischen drei Leistungsstufen umzuschalten. Problematisch ist aber bei dieser bekannten manuellen Saugleistungssteuerung, daß die Unterdruckschalter natürlich auch auf ungewollt im Betrieb auftretende Druckspitzen oder allgemein Druckschwankungen ansprechen und daß vor allen Dingen eine gegenseitige Verriegelung der einzelnen Membranschalter erforderlich ist, denn sonst sprechen natürlich bei einer hinreichend starken Unterdruckschwankung sämtliche Unterdruckschalter gleichzeitig an, auch die, die auf niedrigere Unterdruckwerte eingestellt sind.

Der vorliegenden Erfindung liegt die Aufgabe zugrunde, eine Vorrichtung zur automatischen Saugleistungssteuerung bei einem Staubsauger so auszubilden, daß sich bei Verwendung von zwei und nur von zwei Unterdruckschaltern eine über den gesamten Leistungsbereich des Staubsaugers arbeitende, feinfühlig, also praktisch lediglich unmerklich abgestufte Verstellung im Leistungsbereich ergibt, die dabei ferner so ausgebildet ist, daß häufiges Hin- und Herschalten, also eine Änderung der Leistungsdaten des Gebläseantriebsmotors des Staubsaugers vermieden wird, wobei die Ansteuerschaltung einfach, zuverlässig und besonders kostengünstig, auch im feinmechanischen Bereich, aufgebaut ist.

Vorteile der Erfindung

Die Erfindung löst diese Aufgabe mit den kennzeichnenden Merkmalen des Hauptanspruchs und hat den entscheidenden Vorteil, daß durch die beiden lediglich erforderlichen Unterdruckschalter eine elektronisch auswertbare Fensterwirkung mit Bezug auf die Druckverhältnisse geschaffen wird, die dazu führt, daß es möglich ist, zwar den vollen Leistungsbereich des Gebläseantriebsmotors für den Staubsauger auszunutzen, dennoch auch einen langzeitigen Plateaubetrieb für den Antriebsmotor zu erzielen, so daß häufiges Hin- und Herschalten vermieden wird und bei einem notwendigen Einstellen auf andere äußere Betriebsverhältnisse die Leistungsumschaltung zwar schnell, dennoch aber feinfühlig und ohne abruptes Hochjagen des Motors erfolgt. Dabei ist sichergestellt, daß ein vorgegebener Leistungswert des Gebläseantriebsmotors dann eingehalten wird, also Umschaltungen nicht erfolgen, wenn sich die Unterdruckwerte beispielsweise im Ansaugbereich des Staubsaugers innerhalb eines bestimmten Unterdruckfensters befinden. Sobald sich der gewünschte Unterdruckwert nicht mehr innerhalb dieses Fensters halten läßt, reagieren die beiden, einen oberen bzw. unteren Druckschwellwert vorgebenden Druckschalter mit einer entsprechenden, durch ihre Kombinationswirkung erzielten Leistungsverstellung für den Antriebsmotor, so daß der Unterdruck in den Fensterbereich zurückgeführt wird.

Es gelingt hierdurch, Schwingungen in der Leistungsansteuerung des Gebläseantriebsmotors zu vermeiden und den Staubsauger unter Umständen auch für längere Betriebszeiten mit einem konstanten Leistungsniveau betreiben zu können, welches den jeweiligen Betriebsanforderungen genau angepaßt ist. Dabei verfügt die Eingangsschaltung für die die Leistungsabgabe des Gebläseantriebsmotors bestimmende Ansteuerschaltung über ein Gedächtnis- bzw. ein Erinnerungsvermögen derart, daß vorhergehende Betriebszustände und aus diesen ableitbare Unterdruckgegebenheiten bei der Gestaltung der momentanen Leistungsabgabe des Staubsaugers einbezogen werden. Die Erfindung ist daher nicht ein üblicher Regelschalter, die unter Auswertung eines Sollwert/Istwertvergleichs eine hieraus resultierende Regelabweichung zu beseitigen versucht, sondern die durch den Sollwert/Istwertvergleich gewonnene Regelabweichung, die bei der Erfindung repräsentiert ist durch eine jeweilige bestimmte Schaltkontaktkombination der beiden Unterdruckschalter, wird zunächst unter Einbeziehung vorheriger Schaltzustände und darauf abgestellte, gespeicherte Werte aufbereitet und dient dann der Bildung des Ansteuerwerts für den Leistungsschaltkreis des Motors.

Dabei ist der Aufbau einer ersten Ausführungsform einer solchen Steuerschaltung in vorteilhafter Weise vereinfacht, da neben den beiden auf unterschiedliche Druckwerte justierten Unterdruckschaltern lediglich noch ein Zähler, ein Taktgeber, ein dem Zähler nachgeschalteter Dekodierer und eine von diesem angesteuerte Phasenanschnitt-Steuerschaltung für die Leistungssteuerung des Motors erforderlich sind. Sämtliche Komponenten können jeweils für sich gesehen in hochintetrierter Realisierungsform ausgebildet sein. Dabei ist es auch möglich, die gesamte Schaltung zu integrieren und zusammen mit den beiden Unterdruckschaltern auf einer Schaltplatte oder Printplatte aufzubauen oder als Programmabfolge in einem Rechner oder Mikroprozessor abzulegen - dies gilt für beide Ausführungsformen.

Eine weitere bevorzugte Ausführungsform der Erfindung besteht darin, daß anstelle eines als Speicher oder Gedächtnis arbeitenden Zählers ein analoger Speicher, im einfachsten Fall ein Kondensator vorgesehen ist, dessen jeweiliger, sich aus der Schaltverknüpfung der beiden Unterdruckschalter bestimmender Ladezustand maßgebend ist für die Leistungsabgabe des Staubsaugers im automatischen Betrieb, wobei, wie es sich versteht, zusätzlich noch für sich gesehen bekannte Umschaltemöglichkeiten für die Bedienungsperson vorgesehen sind, damit unter Abschaltung des automatischen Betriebs bestimmte manuelle Leistungsstufen, beispielsweise eine Max-Stellung oder eine Min-Stellung vorgegeben werden können.

Je nach der Art der erfaßten, auf die Druckschalter einwirkenden Unterdrücke ist es schließlich möglich, die Steuerschaltung für den Gebläsemotor auf bestimmte Bedürfnisse im Stuabsaugerbetrieb abzustellen, wobei entweder vorrangig auf die Bodenbeschaffenheit geachtet wird, auf welcher der Staubsauger zu arbeiten hat, oder man berücksichtigt ergänzend bzw. alternativ den Staubbeutelfüllungsgrad. Dies hängt davon ab, aus welchem Bereich im Staubsauger der Unterdruck abgefragt und den Unterdruckschaltern zugeführt wird, ob im Düsenansaugbereich bzw. bei einem Bodenstaubsauger beispielsweise an der Rohreinmündung in den Hauptkörper des Staubsaugers, ob hinter dem Staubbeutel und vor dem Gebläse oder ob hinter dem Gebläse der Druck des Abluftstroms erfaßt wird. Diese Gegebenheiten hängen natürlich auch davon ab, wie diese Komponenten im Staubsauger selbst angeordnet sind, wobei bei bestimmten Staubsaugertypen der Staubbeutel natürlich auch hinter dem Gebläse angeordnet sein kann.

Es ist nicht erforderlich, die Unterdruckschalter auch körperlich an den genannten Stellen anzuordnen. Es genügt, wenn man über kleine Verbindungsschläuche den Unterdruck an diesen Stellen abnimmt und den jeweiligen, mit den Drücken zu beaufschlagenden Flächen der Druckschalter zuführt, die an anderer Stelle, auch in einem separaten kleinen Gehäuse geschützt eingekapselt, angeordnet sein können.

Durch die in den Unteransprüchen aufgeführten Maßnahmen sind vorteilhafte Weiterbildungen und Verbesserungen der im Hauptanspruch angegebenen Vorrichtung möglich. Besonders vorteilhaft ist die Verwendung von pneumatischen Membranschaltern als Druckschalter, die in speziellen Ausführungsformen sehr feinfühlig auf den jeweils gewünschten Unterdruckschwellwert eingestellt werden können. Bekannte Ausführungsformen solcher vorzugsweise membrangesteuerter Unterdruckschalter sind in den weiter vorn schon erwähnten DE-PS'en 31 17 507 und 33 07 002 des gleichen Anmelders im einzelnen erläutert. Dabei sind mit Vorzug auch Unterdruckmembranschalter bekannt, die in einem Gehäuse mehrere Schaltvorgänge durchführen können, und zwar durch die schon erläuterte Verkippungsmöglichkeit einer membranangetriebenen Kontaktplatte. Es ist daher auch möglich, lediglich einen einzigen, mehrere justierbare Schaltstellungen aufweisenden Unterdruckschalter etwa entsprechend der Ausführungsformen nach der DE-PS 31 17 507 zu verwenden und, da für vorliegende Erfindung lediglich zwei Schalter benötigt werden, einen der dort vorhandenen drei Schaltkontakte nicht zu benutzen.

Vorteilhaft ist ferner, dem Zähler der ersten Ausführungsform,dessen jeweilige, beispielsweise in einem BDC-Code vorliegende Ausgangskonfiguration die jeweilige Leistungsstufe des Motors steuert, Verriegelungs- und Rücksetzmittel so zuzuordnen, daß der Zähler nicht bei durchlaufender Ansteuerung sozusagen überläuft, sondern dann auf Endwerten festgehalten wird bzw. auf diese rückgesetzt wird, wodurch abrupte Übergänge und Schwankungen in der Ansteuerung des Gebläsemotors vermieden sind.

Vorteilhaft ist ferner, gleichzeitig ein Lichtband oder eine Lichtleiste, die auch aus diskreten Einzelleuchten bestehen kann, so angesteuert werden kann, daß eine Bedienungsperson darüber informiert wird, welche zur Verfügung stehenden Saugleistung jeweils eingeschaltet ist. Die Anpassung an die unterschiedlichen Gegebenheiten erfolgt insgesamt automatisch, wobei durch die Vielzahl der möglichen Schaltstufen auch bestimmte vorteilhafte Kennlinien der Drehzahlregelung für den Staubsauger-Gebläsemotor möglich sind. So kann beispielsweise mit steigendem Unterdruck im Ansaugbereich mit der Drehzahl und entsprechend der zur Verfügung gestellten Saugleistung hoch- oder runtergegangen werden, so daß man z.B. bei einem bewußt stärkeren Andrücken und damit Abdichten der jeweils benutzten Saugbürste auf die Arbeitsunterlage, Teppich, Möbelpolsterung o.dgl. auch eine Verstärkung der angebotenen Saugleistung erzielt wird, wodurch dann auch in schwierigeren Fällen entsprechende größere Schmutzpartikel, Fusseln oder Fäden aufgenommen werden können. Hierzu können schließlich ergänzend noch manuelle Umschaltmittel etwa im Handführungsbereich für die Bedienungsperson vorgesehen sein, also Schalter, die extern der im folgenden genauer erläuterten Ansteuer- und Regelschaltung für die Staubsaugerleistung bestimmte Grundwerte oder auswählbare Betriebsverhaltensmuster auferlegen können, so daß dann nach Art verschiedener Staubsaugerprogramme gearbeitet werden kann. So ist es beispielsweise möglich, beim Absaugen von Gardinen oder sonstigen leichten Stoffen die maximal zur Verfügung stehende Saugleistung zu begrenzen, indem man beispielsweise bestimmte Zählerstellungen sperrt. Es sei aber darauf hingewiesen, daß die automatische Saugleistungssteuerung nach vorliegender Erfindung grundsätzlich ein Regelverfahren ist, welches den vom Gebläsemotor erzeugten Unterdruck als Istwert abfragt, mit entsprechenden Schwellwerten (beispielsweise nach Art eines Fensterdiskriminators) vergleicht und dann im Ansteuerbereich für den Gebläsemotor entsprechend nachzieht.

Zeichnung

Ausführungsbeispiele der Erfindung sind in der Zeichnung dargestellt und werden in der nachfolgenden Beschreibung näher erläutert. Es zeigen:
Fig. 1 in schematischer Darstellung einen Staubsauger mit mehreren, an verschiedenen Stellen im Staubsaugerbereich angeordneten Unterdruckempfängern;
Fig. 2 gleichzeitig in Blockbilddarstellung (gestrichelte Linien) im Grundaufbau die erfindungsgemäße Steuerschaltung sowie in einer detaillierten Darstellung in Form diskreter Bauelemente einschließlich verwendeter IC-Bausteine;
Fig. 3 zeigt einen möglichen Verlauf der Leistungssteuerung des Gebläsemotors in Abhängigkeit von den Stellungen der Unterdruckschalter über der Zeit und
Fig. 4 zeigt darauf abgestimmt die hierbei auftretenden Druckschwankungen, die zu den entsprechenden Druckschalterumschaltungen führen, d.h. den Verlauf des vom Staubsaugergebläse erzeugten Unterdrucks über der Zeit;
Fig. 5 zeigt schließlich, ebenfalls in teilweiser Blockbilddarstellung (gestrichelten Linien) und im Grundaufbau eine weitere Ausführungsform einer Steuerschaltung gleichzeitig in Form diskreter Bauelemente mit einem analogen Speicher zur Auswertung und Umsetzung der Unterdruck-Schalterkombination.

Beschreibung der Ausführungsbeispiele

Der Grundgedanke vorliegender Erfindung besteht also darin, eine geregelte und feinfühlig auf die jeweiligen Unterdruck- und Betriebszustände des Staubsaugers abgestimmte Staubsauger-Leistungsabgabe unter Verwendung von lediglich zwei Unterdruckschaltern zu ermöglichen, wobei unter Vermeidung der bekannten Nachteile von Zweipunktreglern dadurch ein beruhigtes Arbeiten ohne wiederholtes Umschalten und daher entsprechende große Sprünge in der Leistungsabgabe des Motors realisiert werden kann, daß die Auswertung der lediglich zwei Istwertzustände, die durch die Unterdruckschalter erfaßt werden können, über die Zuordnung eines Speichers beruhigt und in ein sich im wesentlichen stetig änderndes bzw. konstant bleibendes Regelabweichungssignal umgesetzt wird.

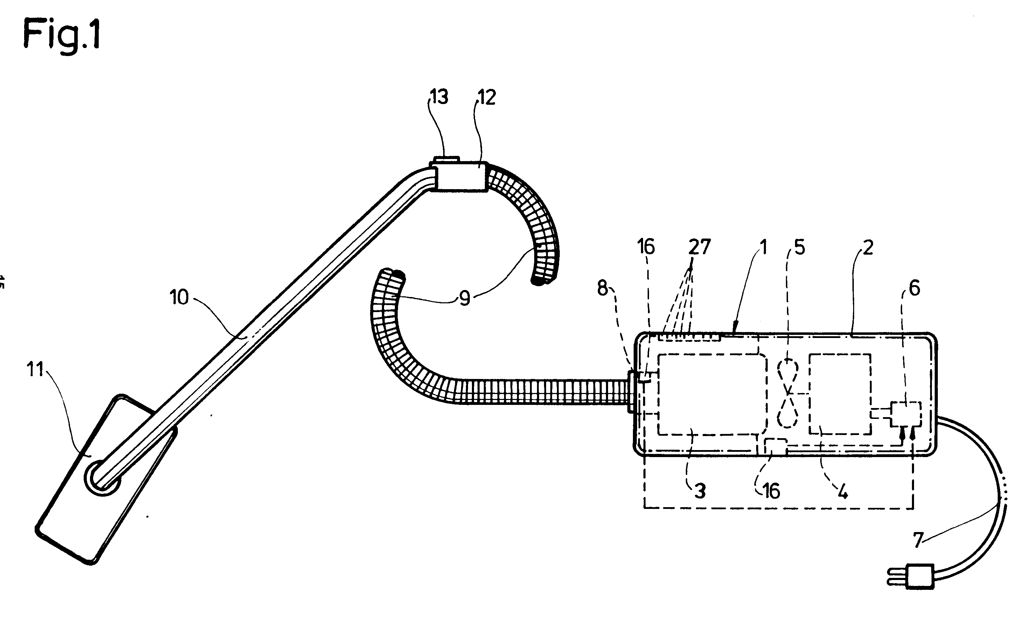

In Fig. 1 ist der Staubsaugerkörper mit 1 bezeichnet; er umfaßt ein Gehäuse 2, in welchem der Staubbeutel 3, das vom Motor 4 angetriebene Gehäuse 5 und eine elektrische oder elektronische Steuerschaltung 6 angeordnet sind. Es ist ein Anschluß 7 zu einer externen Stromquelle vorhanden; die Saugmündung 8 des Staubsaugers ist bei diesem Ausführungsbeispiel über ein flexibles Kunststoff- oder Metallrohr 9 üblicherweise mit einem weiteren starren Rohr 10 verbunden, an dessen Ende sich eine Saugbürste 11 oder ein ähnliches Gerät befindet. Am Übergang zwischen der flexiblen Schlauchleitung 9 und dem starren Rohr 10 befindet sich bei dem dargestellten Ausführungsbeispiel ein Handgriff oder ein Führungsorgan 12, welches von der Bedienungsperson erfaßt wird.

Beim Betrieb des Staubsaugers ergeben sich Unterdruckschwankungen, die z.B. davon abhängen, wie stark der Saugmündungsbereich etwa bei der Bürste 11 gegenüber der Umgebungsluft abgedeckt wird, welche Beschaffenheit die zu reinigende Fläche aufweist (Teppich, hochfloriger Teppich, Auslegeware, Holz- oder Steinfußboden o.dgl.), oder auch vom Staubbeutelfüllungsgrad, der natürlich auch in die Bildung des Unterdrucks im Düsenbereich des Staubsaugers eingeht.

Beispielsweise führt auch ein stärkeres Andrücken einer Bürste, besonders wenn diese über eine Teppichware geführt wird, zu einem stärkeren Abschluß und zu einem höheren Unterdruck, da die an der Saugbürste vorbeiströmenden Restluftmengen reduziert werden.

Zur Erfassung der im Staubsaugerbereich vorliegenden Unterdruckwerte können an verschiedenen Stellen, beispielsweise bei 16 und 16′ bei dem in Fig. 1 dargestellten Ausführungsbeispiel Unterdruckschalter angeordnet sein. Die Ausgangsleitungen dieser Unterdruckschalter 16 und 16′ sind mit der elektronischen Steuerschaltung 6 verbunden.

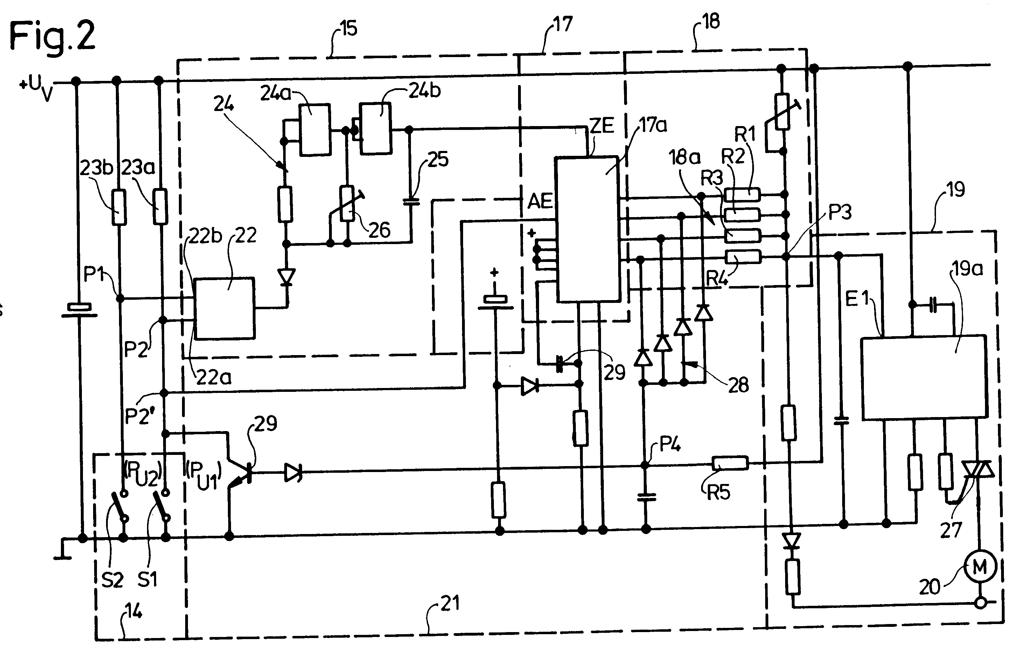

Ein erstes Ausführungsbeispiel einer elektronischen Steuerschaltung 6 ist so aufgebaut, wie in Fig. 2 gezeigt und im nachfolgenden erläutert; es versteht sich aber und hierauf wird ausdrücklich hingewiesen, daß stets Teile oder die gesamte Steuerschaltung bei beiden Ausführungsbeispielen in analoger, hybrider oder digitaler Technik, entsprechend auch hochintegriert aufgebaut sein können, oder sie können auch ganz oder teilweise zusammengefaßt einer programmgesteuerten Logikschaltung, einem Rechner o.dgl. zugeordnet sein, der dann die entsprechenden Funktionen, wie nachfolgend erläutert, ausführt. Die Erfindung ist daher charakterisiert durch die nachfolgende Funktionserläuterung und ist weder gebunden noch beschränkt durch die im nachfolgenden im einzelnen erläuterten diskreten Schaltungsmittel.

Die elektronische Steuerschaltung für die Leistungsbe aufschlagung des Gebläseantriebsmotors umfaßt entsprechend der Darstellung der Fig. 2, und zwar zunächst in Form übergeordneter Funktionsblöcke angegeben, die in Fig. 2 gestrichelt sind, einen Drucksensorblock 14, einen eine Zählschaltung 17 beaufschlagenden Taktgeber 15, eine mit den Ausgängen der Zählschaltung 17 verbundene Dekodierschaltung 18 und dieser nachgeschaltet eine (Phasenanschnitt)Leistungssteuerschaltung 19 für den Antriebsmotor 20 des Gebläses 5. Ferner sind als periphere Schaltungen noch Verriegelungs- und Rücksetzmittel 21 vorgesehen, die direkt auf den Zähler arbeiten und dafür sorgen, daß der Zähler bei durchlaufender Ansteuerung beispielsweise bei Erreichen seines Endzählerstands nicht einfach wieder auf den Ausgangszählerstand Null zurücksetzt oder bei Ansteuerung in Gegenrichtung bei Erreichen eines Zählerstands Null nicht auf maximalen Zählerstand überspringt.

Die Grundfunktion ist dann so, daß die beiden Druckschalter S1, S2 durch ihre jeweiligen eingenommenen Schaltzustände (beide offen, beide geschlossen, der eine offen, der andere geschlossen) über ein Ansteuergatter 22 den Taktgeber 15 anwerfen oder ausschalten, dessen Zählimpulse von der Zählschaltung 17 empfangen und in eine Ausgangskonfiguration umgewandelt werden. Aus dieser bildet die Dekodierschaltung 18 ein beispielsweise analoges Ansteuersignal für die (Phasenanschnitt)Leistungssteuerschaltung 19, was den Gebläseantriebsmotor 20 entsprechend in seiner Drehzahl und Leistungsabgabe steuert.

Die detaillierte Schaltung zeigt die beiden Druckschalter S1, S2 als Schließer, die bei einem bestimmten, jeweils auf sie einwirkenden Unterdruck schließen und dann Vorwiderstände 23a, 23b gegen Masse kurzschließen, wodurch auch die beiden Schaltungspunkte P1 und P2 als Verbindungspunkte zwischen den Druckschaltern S1, S2 Massepotential annehmen.

Es sei davon ausgegangen, daß der erste Druckschalter S1 (beide Druckschalter sind bevorzugt membrangesteuerte Druckschalter und in ihren jeweiligen Ansprechwerten äußerst feinfühlig und genau einstellbar) bei einem ersten gegebenen geringeren Unterdruck Pu1 anspricht, der, um hier eine numerische Zahl zu nennen, die allerdings nicht als einschränkend zu verstehen ist, beispielsweise 50 mbar betragen kann. Der zweite Unterdruckschalter S2 spricht dann bei einem höheren Unterdruck Pu2 an, der beispielsweise 150 mbar beträgt. Beide Unterdruckschalter S1 und S2 befinden sich, wie zunächst angenommen werden soll, im Bereich des in Fig. 1 dargestellten Unterdruckschalters 16'und reagieren daher auf den Druck vor dem Staubbeutel 3 bzw., was in etwa das gleiche ist, auf den im Ansaugbereich der Bürste 11 entwickelten Unterdruck.

Ein dritter Schaltungspunkt P2', der im Potential mit dem Schaltungspunkt P2 identisch ist, steuert über eine Verbindungsleitung einen Aufwärts/Abwärts-Zähleingang AE eines Aufwärts/Abwärtszählers 17a der Zähleinrichtung 17. Der Aufwärts/Abwärtszähler 17a kann bevorzugt als 16-bit-Zähler ausgebildet sein, wie bei dem dargestellten Ausführungsbeispiel.

Über das Potential der Schaltungspunkte P1 und P2 wird die Funktion des Ansteuergatters 22 für die astabile Schwingschaltung 24 der Zählschaltung 15 bestimmt. Das Ansteuergatter 22 ist bevorzugt ein negierendes exklusives ODER-Gatter, also ein Ex-NOR-Gatter. Auch die astabile Schwingschaltung besteht aus zwei in Reihe geschalteten Ex-NOR-Gattern 24a und 24b, die über einen Kondensator 25 rückgekoppelt sind. Ein Einstellwiderstand 26 in Form eines Trimmers bestimmt die Frequenz des aus den beiden NOR-Gattern 24a, 24b aufgebauten astabilen Schwingers. Die von dem astabilen Schwinger erzeugte Ausgangsfrequenz ist bewußt niedrig gehalten und kann bei beispielsweise lediglich 1 Hz liegen und wird dem Zähleingang ZE des Zählers 17a zugeführt.

Je nach errechtem Zählerstand ergibt sich dann an den Ausgängen Q0, Q1, Q2 und Q3 des Aufwärts/Abwärtszählers 17a eine bestimmte Ausgangskonfiguration in Form eines binären Worts, die über eine die Dekodierschaltung 18 bildende Widerstandskombination 18a in einem sich in seinem analogen Spannungswert feinstufig verändernden Pegel am Schaltungspunkt P3 umgesetzt wird. Mit anderen Worten, am Schaltungspunkt P3 ergibt sich eine sich stetig nach oben oder unten entwickelnde, sich entsprechend der Ausgangskonfiguration des Zählers 17a ohne abrupten Übergang verändernde Spannung, die einem Steuereingang E1 eines IC-Phasenanschnitt-Steuerbausteins 19a zugeführt ist. Dieser arbeitet mit seinem Ausgang auf eine übliche Triac-Konfiguration 27, die in üblicher Weise in Reihe mit dem Gebläseantriebsmotor des Staubsaugers liegt.

Es ergibt sich dann folgende Funktion. Zunächst beim Einschalten des Staubsaugers sind beide Druckschalter S1, S2 geöffnet, da noch kein Unterdruck herrscht.

Dies bedeutet, daß an den Schaltungspunkten P1 und P2 mit P2' positives Potential vorliegt, wodurch über das Ex-NOR-Gatter 22 der astabile Schwinger 24 angeworfen wird und den nachgeschalteten Zähler 17a beaufschlagt. Gleichzeitig bedeutet positives Potential am Aufwärts/Abwärtszähleingang AE des Zählers 17a vom Schaltungspunkt P2' her die Aufwärtszählrichtung, so daß sich durch die entsprechende Änderung der hochliegenden Ausgangsanschlüsse Q0 bis Q3 und über die Umsetzung mit Hilfe der Dekodierwiderstände R1, R2, R3, R4 eine allmählich ansteigende Ansteuerspannung für die Phasenanschnitt-Steuerschaltung 19 ergibt.

Man erkennt im übrigen, daß sich hierdurch gleichzeitig ein Sanftanlauf des Gebläseantriebsmotors realisieren läßt, so daß hierzu keine zusätzlichen, getrennten Steuerungen erforderlich sind.

Bei Erreichen des ersten Druckschwellwerts Pu1 schließt dann der erste Druckschalter S1 und nimmt das positive Potential sowohl von der einen Eingangsklemme 22a des Ex-NOR-Gatters 22 als auch vom Aufwärts/Abwärtszähleingang AE des Zählers 17a weg. Dies bedeutet, daß die Zählimpulse der astabilen Schwingschaltung 24 wegbleiben, da diese über ihr Ansteuergatter 22 nicht mehr angesteuert wird; gleichzeitig wird aber auch die Zählrichtung am Zähler 17a vorbereitend umgekehrt, so daß der Zähler nunmehr abwärtszählen wird.

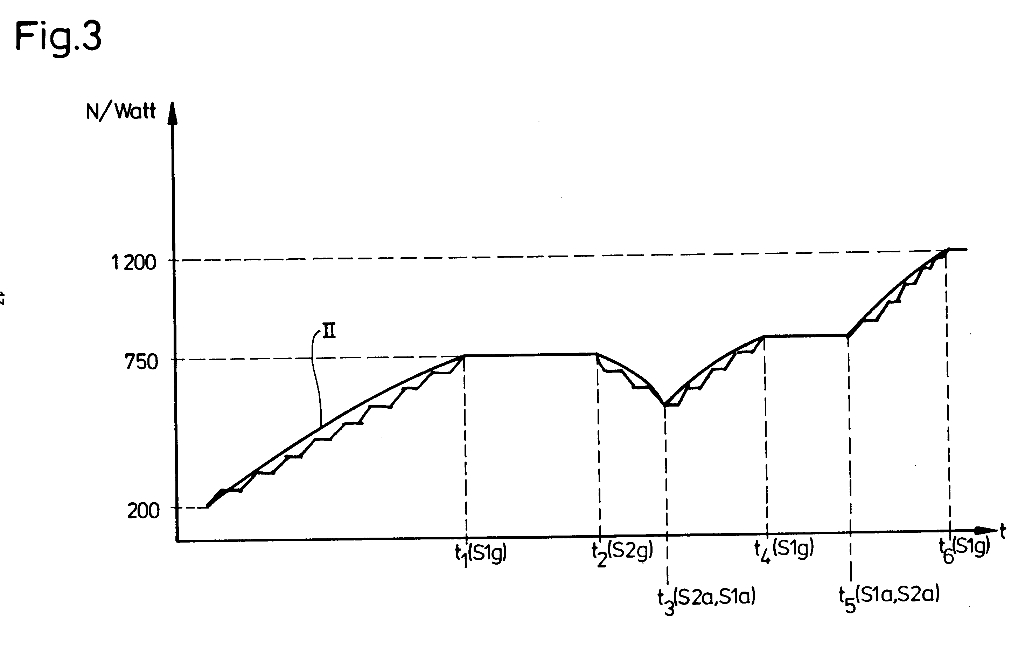

Im folgenden wird Bezug genommen auf den Diagrammverlauf der Fig. 3 - diese Vorgänge spielen sich ab bis zum Zeitpunkt t1, zu welchem dann der erste Schalter S1 schließt und geschlossen bleibt (S1g). Dies bedeutet, daß ab diesem Zeitpunkt die Leistungsabgabe des Gebläseantriebsmotors 20 konstant bleibt, da sich am Steuereingang E1 des Phasenanschnitt-Steuerbausteins 19a keine Änderung mehr ergibt.

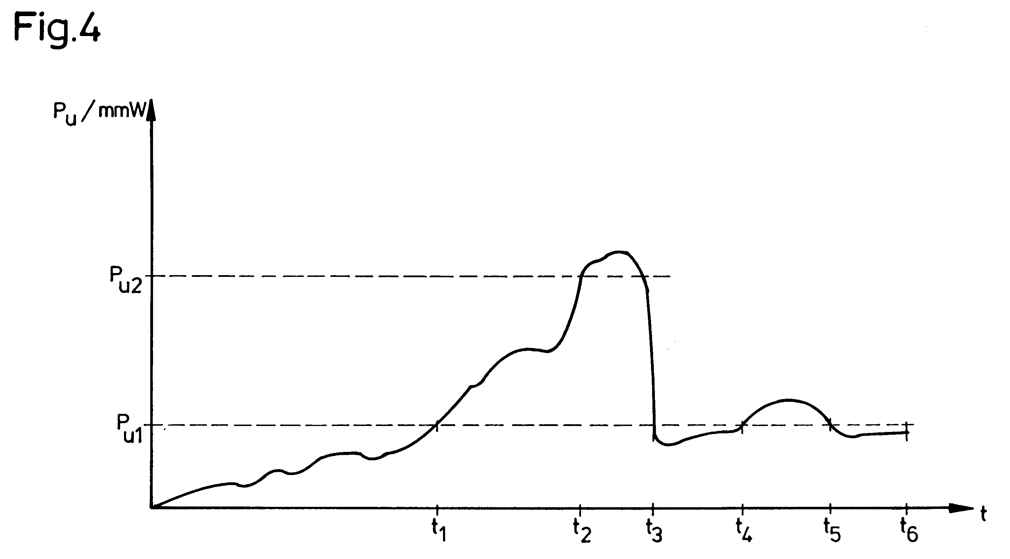

Es ist aber nicht ausgeschlossen, daß sich durch wechselnde Einflüsse im Saugbereich eine entsprechende Unterdruckerhöhung ergibt, wie dies ab dem Zeitpunkt t1 in dem zweiten Diagramm der Fig. 4 durch den Unterdruckanstieg zwischen den Zeitpunkten t1 und t1 erkennbar ist.

Dieser Unterdruckanstieg kann beispielsweise darauf zurückzuführen sein, daß nunmehr auf einem hochflorigen Teppichmaterial gereinigt wird, wodurch sich eine größere Absperrwirkung ergibt und sich im übrigen auch der manuelle Schiebewiderstand erheblich vergrößert. Da dies nicht erwünscht ist, oder um überhaupt so starke Unterdruckschwankungen zu vermeiden, ist der zweite Unterdruckschalter S2 auf einen höheren oder oberen Unterdruckwert Pu2 justiert und schließt zum Zeitpunkt t2, zu welchem der Unterdruckverlauf diesen Schwellwert überschreitet. Es sind dann beide Unterdruckschalter S1 und S2 geschlossen, die Schaltungspunkte P1 und P2 führen wieder gleiches Potential und das Ex-NOR-Gatter 22 steuert die astabile Schwingschaltung 24 wieder an, so daß der Zähler 17a nunmehr abwärtszählt und sich nach der Dekodierung ein entsprechend verringertes Ansteuersignal für die Phasenanschnitt-Steuerschaltung 19a ergibt. Die Leistungsabgabe des Gebläseantriebsmotors 20 verläßt dann das in Fig. 3 zwischen den Zeitpunkten t1 und t2 eingenommene Plateau und wird so weit nach unten geregelt, bis der gemessene Istwert des Unterdrucks wieder in den Fensterbereich zwischen Pu1 und Pu2 gelangt.

Bei der Diagrammdarstellung in den Fig. 3 und 4 ist allerdings angenommen, daß in diesem Moment der Unterdruck auch unter den unteren Schwellwert Pu1 fällt (aus irgendwelchen, nicht näher zu erörternden Gründen), so daß auch gleich noch der Schalter S1 öffnet und es ergibt sich dann die gleiche Wirkung wie soeben geschildert. Beide Schalter sind offen - das Potential am Schaltungspunkt P2' schaltet wieder auf Aufwärtszählung am Zähler 17a um und die Leistung wird wieder nach oben geführt. Der weitere Verlauf der beiden Diagramme in den Fig. 3 und 4 erklärt sich von selbst, wobei in dem hier erläuterten, speziellen Ausführungsbeispiel mit vier verschiedenen Ausgangsanschlüssen Q0, Q1, Q2 und Q3 wie in der binären Schalttechnik bekannt, insgesamt 16 unterschiedliche Stufungen realisierbar sind, die durch die entsprechend bemessenen Widerstände R1, R2, R3, R4 in der Dekodierschaltung in die analoge Ansteuerspannung umgesetzt werden. Nach 16 Aufwärtszählschritten hat daher der Zähler 17a seinen maximalen Ausgangszählerstand und der Gebläseantriebsmotor 20 gleichzeitig seine maximale Leistung erreicht, wie in Fig. 3 gezeigt.

Damit in einem solchen Fall dann, wenn möglicherweise aufgrund der Unterdruckschalterstellungen nach noch mehr Leistung verlangt wird, aufgrund der durchlaufenden astabilen Schwingschaltung 24 der Zähler nicht einfach auf seinen Null-Erstwert wieder zurückschaltet und dann wieder aufwärtszählt, was natürlich einen abrupten Leistungssprung in der Motoransteuerung bedeuten würde, ist noch die Verriegelungsschaltung 21 vorgesehen, die bei dem dargestellten Ausführungsbeispiel eine Diodenkombination 28 umfaßt, die die Ausgänge des Zählers 17a abfragt und einen parallel zum ersten Schalter S1 geschalteten Transistor 29 ansteuert. Vereinbarungsgemäß soll die maximale Leistungsstufe hochliegenden Ausgangsanschlüssen aller vier Ausgänge Q0, Q1, Q2, Q3 des Aufwärts/Abwärtszählers 17a entsprechen. In diesem Fall sperren sämtliche Dioden 28 und der Schaltungspunkt P4 geht über den Widerstand R5 auf positives Ansteuerpotential für den Transistor 29, so daß dieser durchschaltet und den Schalter S1 überbrückt, auch wenn dieser im angenommenen Fall geöffnet ist. Hierdurch wird die astabile Schwingschaltung 24 gestoppt und gleichzeitig die Zählrichtung umgekehrt, so daß der maximale Ausgangssteuerwert für die Phasenanschnittsteuerung aufrechterhalten bleibt. Verändern sich dann die Drücke im Sensorbereich, dann wird zunächst der untere Druckschwellwert Pu1 überschritten und Schalter S1 schließt, wodurch nichts veranlaßt wird; anschließend kann auch der obere Druckschwellwert Pu2 erreicht werden und der Schalter S2 schließt. Dann beginnt der Zähler 17a sofort abwärts zu zählen; seine Ausgangskonfiguration ändert sich und mindestens eine der Dioden wird leitend und zieht den Schaltungspunkt P4 auf niedriges Potential, der Transistor 29 sperrt und die normale Funktion ist wieder hergestellt.

Eine ähnliche Wirkung ergibt sich dann, wenn die Leistung auf den unteren Ausgangswert eingependelt hat, der dem Wert Null entspricht. Damit bei einem weiteren Abwärtszählen nicht auf größtmögliche Ausgangskonfigurationen des Zählers 17a umgeschaltet wird, nutzt man einen bei Erreichen des Nullwerts vom Zähler selbst erzeugten Rückstellimpuls aus und leitet diesen über einen Kondensator 29 auf den Rücksetzeingang, so daß der Zähler auf der Ausgangskonfiguration des Nullwerts verbleibt und von da aus wieder hochzählen kann.

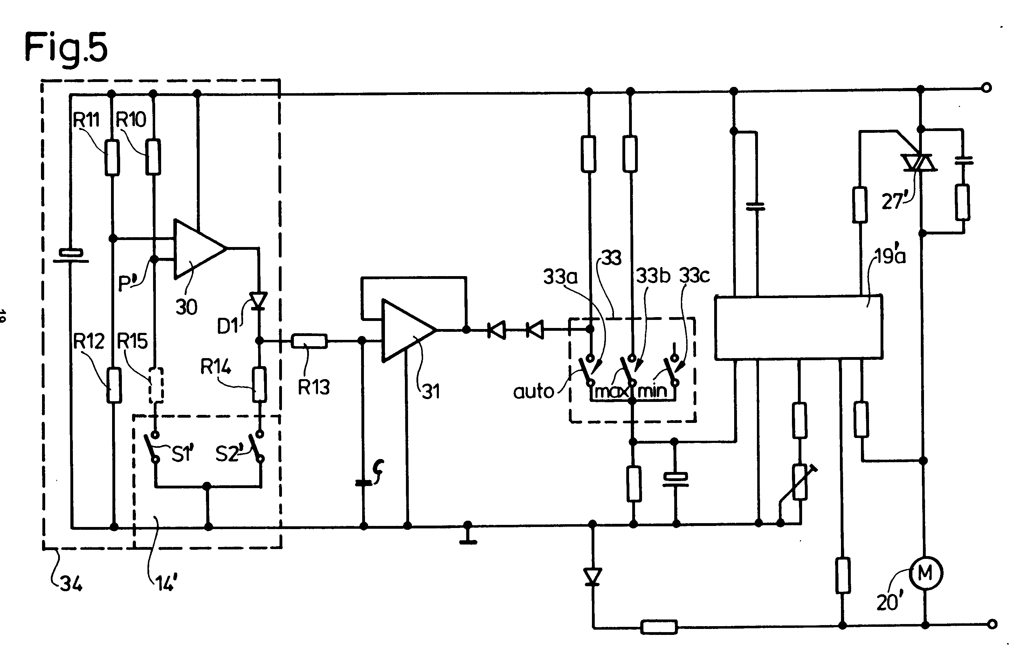

Eine zweite, weiter vereinfachte Ausführungsform einer Steuerschaltung ist in Fig. 5 dargestellt, wobei nur auf die unterschiedlichen Komponenten mit Bezug auf die Darstellung der Fig. 2 eingegangen wird und gleiche oder gleichwirkende Komponenten mit dem gleichen Bezugszeichen, zum Unterschied durch einen Beistrich oben, gekennzeichnet sind.

Der bei einem niedrigeren Unterdruck (Pu1) schließende Unterdruckschalter S1′ ist in Reihe geschaltet mit einem Widerstand R10, wobei der Verbindungspunkt P am nichtinvertierenden Eingang eines nachgeschalteten Operationsverstärkers 30 liegt. Der andere Eingang (invertierende Eingang) ist in seiner Vorspannung von einem Referenz-Spannungsteiler aus R11, R12 bestimmt.

Über eine für positive Spannungen in Durchlaßrichtung gepolte Diode D1 und einem nachgeschalteten Widerstand R13 gelangt das Ausgangspotential des Operationsverstärkers oder Komparators 13 auf einen analogen Speicher in Form eines Kondensators C, dessen anderer Anschluß mit Massepotential verbunden ist.

Gleichzeitig ist mit dem Verbindungspunkt der Diode D1 und des Widerstands R13, insofern einen Kurzschlußkreis für den Kondensator C bildend, über einen weiteren Widerstand R14 der zweite, auf einen höheren Unterdruckwert justierte Unterdruckschalter S2 gegen Masse geschaltet.

Ein dem Kondensator C nachgeschalteter weiterer Operationsverstärker 31 übernimmt das Kondensatorsignal und führt dieses dem für sich gesehen bekannten Aufbau eines Phasenanschnitt-Steuerbausteins 19a′ zu, der dann in üblicher Weise je nach dem ihm zugeführten Steuerpotential den Leistungstriac 27′ in Reihe mit dem Antriebsmotor 20′ entsprechend durchsteuert. Auf diese Schaltungskombination braucht nicht genauer eingegangen zu werden; zu erwähnen ist noch, daß zwischen den Ausgang des zweiten Operationsverstärkers 31 und dem Eingang des Phasenanschntit-Steuerbausteins 19a′ eine manuelle Schalterkombination 33 geschaltet ist, die einen ersten Schalter 33a für den automatischen Steuerbetrieb enthält, einen zweiten Schalter 33b, bei dessen Betätigung (geschlossener Zustand) der maximale Betrieb des Gebläsemotors manuell eingesteuert werden kann (max-Stufe) und schließlich einen dritten Schalter 33c, der, wieder unabhängig von der automatischen Einstellung im Sinne eines Override-Schalters eine in ihren Werten bestimmbare min-Arbeitsstufe für den Gebläsemotor des Staubsaugers vorgibt.

Die Funktion bei diesem zweiten Ausführungsbeispiel ist dann so, daß eine Aufladung des Kondensators C über den ersten Operationsverstärker 30 dann erfolgt, wenn der Schalter S1′ und selbstverständlich auch der auf einen höheren Unterdruckwert justierte Schalter S2′, also beide offen sind. In diesem Fall steigt das Potential am Kondensator C an und steuert entsprechend bei geschlossenem Automatikschalter 33a über den Phasenanschnitt-Steuerbaustein 19a′ den Gebläsemotor 20′ in seiner Leistung hoch.

Nach Erreichen eines ersten vorgegebenen Unterdruckniveaus schließt der Schalter S1′ und durch eine entsprechende Abstimmung im Ansteuerbereich des ersten Operationsverstärkers 30 hält dieser nun an seinem Ausgang ein Konstantniveau ein, so daß der Kondensator C2 sein Potential am Eingang des nachgeschalteten Operationsverstärkers 31 nicht mehr ändert. Zu diesem Zweck kann es zweckmäßig sein, in Reihe mit dem Unterdruckschalter S1′ noch einen Widerstand R15 zu schalten.

Schließt mit weiter ansteigendem Unterdruck S2′, wobei die gleichen Kurvenverläufe durchfahren werden können, wie weiter vorn schon anhand der Darstellungen der Fig. 3 und 4 erläutert, dann ergibt sich nunmehr ein Entladekreis für den Kondensator C über die Widerstände R13 und R14, so daß dessen Ladung wieder kontinuierlich analog abnimmt, mit einer entsprechenden geregelten Leistungsreduzierung des Gebläsemotors.

Der funktionelle Unterschied bei der Ausführungsform der Fig. 5 gegenüber der der Fig. 2 besteht daher darin, daß, wie der gestrichelte Kurvenverlauf II in Fig. 3 zeigt, die Änderungen in der Leistungsabgabe nicht fein abgestuft entsprechend den vorhandenen Zählerschritten, sondern vollständig glatt durchlaufend erfolgen, allerdings ebenfalls unter Einnahme von konstanten Plateauniveaus in der eingesteuerten Leistungsabgabe, wie sie sich entsprechend Fig. 3 zwischen den Zeitpunkten t1 und t2 einerseits bzw. t4 und t5 andererseits auf jeweils unterschiedlichen Niveaus ergeben.

Durch beide Ausführungsbeispiele gelingt es daher, den Unterdruck innerhalb eines, falls gewünscht auch sehr schmal bemessenen Druckfensters zu halten, wobei es ergänzend in beliebiger Ausgestaltung vorliegender Erfindung möglich ist, auch auf andere Betriebsgegebenheiten des Staubsaugers Rücksicht zu nehmen, beispielsweise den Staubbeutelfüllungsgrad bei der Ansteuerung des Gebläseantriebsmotors zu berücksichtigen. Verwendet man beispielsweise membrangesteuerte Druckschalter, bei dem beide Membranseiten gegenüber der Umgebung abgedichtet sind, dann kann man den oder die Druckschalter S1, S2 auch als Differenzschalter ausbilden und beispielsweise über an geeigneter Stelle vor und hinter dem Staubbeutel angeordnete Schlauchleitungen die jeweiligen Membranseiten der Druckschalter beaufschlagen. Es ist auch möglich, mit umgekehrter Kennlinie zu fahren, so daß es sich versteht, daß die soeben im einzelnen besprochene Schaltung der Fig.2 bzw. 5 lediglich eines der Ausführungsbeispiele darstellt, um die Leistungsabgabe des Gebläsemotors in gewünschter Weise abhängig von Druckwerten im Betriebsbereich des Staubsaugers zu steuern. Hier kommen dann noch die manuellen Eingriffsmöglichkeiten hinzu, beispielsweise mittels eines Schalters 13 (siehe Fig. 1) oder der Schalter 33. Bei Betätigung kann beispielsweise auch auf eine andere Dekodierschaltung 18 umgeschaltet werden, so daß sich andere Kennlinien ergeben.

## Patentansprüche

1. Vorrichtung zur automatischen Saugleistungssteuerung eines Staubsaugers, dessen Gebläse von einem Elektromotor mit zugeordneter elektrischer oder elektronischer Ansteuerschaltung angetrieben ist, mit einem Staubgefäß (Staubbeutel) und mit auf das Ausmaß des vom Gebläse erzeugten Unterdrucks ansprechenden (membrangesteuerten) Unterdruckschaltern, die auf unterschiedliche Unterdruck-Ansprechschwellwerte justiert sind und auf die Ansteuerschaltung arbeiten, dadurch gekennzeichnet, daß lediglich zwei Unterdruckschalter (S1, S2; S1', S2') vorgesehen und in ihrem Schaltverhalten so miteinander und mit der nachgeschalteten Ansteuerschaltung verknüpft sind, daß unterhalb eines ersten Unterdruckschwellwerts (Pu1 - beide Schalter offen) die Ansteuerschaltung den Gebläuseantriebsmotor auf steigende Leistungsabgabe, bei einem zwischen den beiden Unterdruckschwellwerten (Pu1; Pu2) liegenden Istwert (einer der Schalter geschlossen) auf ein konstantes Leistungsplateau und bei Überschreiten auch des zweiten Unterdruckschwellwerts (Pu2) auf geringer werdende Leistungsabgabe regelt, wobei den Unterdruckschaltern (S1, S2; S1', S2') ein Speicher (Zähler 17a; Kondensator C) nachgeschaltet ist, dessen aus den vorherigen Schaltzuständen der Unterdruckschalter mitbestimmter momentaner Ausgangswert die jeweils aktuelle Leistungsabgabe des Gebläsemotors (20, 20') vorgibt.

2. Vorrichtung nach Anspruch 1, dadurch gekennzeichnet, daß der Speicher eine Zahlschaltung (17) ist, deren jeweils feinstufiger Ausgangszählerstand den Ansteuer-Leistungsgrad des Gebläseantriebsmotors (20) bestimmt, wobei unterschiedliche Schaltzustände der beiden Unterdruckschalter (S1, S2) die Aufwärts- bzw. Abwärtszählrichtung des Zählers (17a) in einer solchen Verknüpfung bestimmen, daß bei dem sich zwischen den beiden Unterdruck-Ansprechschwellwerten (Pu1, Pu2) bewegenden Istwert der Gebläseantriebsmotor auf einem konstanten Leistungsplateau arbeitet.

3. Vorrichtung nach Anspruch 1, dadurch gekennzeichnet, daß der Speicher ein Kondensator (C) ist, der durch eine vorgeschaltete, mit den Unterdruckschaltern (S1', S2') verbundenen Ladeschaltung (34) bei offenen Unterdruckschaltern (S1', S2') geladen, bei einem sich zwischen den beiden Unterdruck-Ansprechschwellwerten bewegenden Istwert (einer der Schalter geschlossen) auf konstanter Ausgangsspannung gehalten und bei geschlossenem zweiten Unterdruckschalter (S2') über einen Entladekreis (R13, R14; S2') entladen wird.

4. Vorrichtung nach Anspruch 1 oder 2, dadurch gekennzeichnet, daß die beiden Unterdruckschalter (S1, S2) so auf eine nachgeschaltete astabile Schwingschaltung (24) arbeiten, daß diese bei gleichsinnigen Schaltzuständen der Unterdruckschalter (S1, S2) einen ersten Betriebszustand und bei unterschiedlichen Schaltzuständen einen zweiten Betriebszustand einnimmt.

5. Vorrichtung nach Anspruch 4, dadurch gekennzeichnet, daß die astabile Schwingschaltung (24) auf den Zähleingang (ZE) des Aufwärts/Abwärtszählers (17a) arbeitet.

6. Vorrichtung nach einem der Ansprüche 1 bis 5, dadurch gekennzeichnet, daß die Schaltzustände an den Ausgängen (Q0 bis Q3) des Aufwärts/Abwärtszählers (17a) so miteinander verknüpft sind, daß sich je nach der Zählrichtung (Aufwärts/Abwärts) des Zählers (17a) ein feingestuft monoton ansteigendes oder abfallendes Ansteuersignal ergibt, welches dem Steuereingang einer nachgeschalteten Phasenanschnitt-Steuerschaltung für den Gebläseantriebsmotor (20) zugeführt ist.

7. Vorrichtung nach einem der Ansprüche 1 bis 6, dadurch gekennzeichnet, daß beide Schalter bei Erreichen bestimmter vorgegebener Unterdruckschwellwerte aktivierte Schließer sind, wobei der erste bei einem niedrigeren Unterdruck (Pu1) ansprechende Unterdruckschalter (S1) gleichzeitig die Zählrichtung des Aufwärts/Abwärtszählers (17a) bestimmt.

8. Vorrichtung nach einem der Ansprüche 1 bis 7, dadurch gekennzeichnet, daß die Unterdruckschalter (S1, s2) mit an die Versorgungsspannung (+Uv) geschalteten Widerstände (23a, 23b) in Reihe geschaltet sind und die Verbindungspunkte (P1, P2, P2′) der Unterdruckschalter mit den Reihenwiderständen mit den Eingängen der Ansteuer-Gatterschaltung (Ex-NOR-Gatter 22) für die astabile Schwingschaltung (24) verbunden sind, wobei der erste Schalter (S1) im geöffneten Zustand die Aufwärtszählrichtung und im geschlossenen Zustand die Abwärtszählrichtung des Zählers (17a) bestimmt derart, daß bis zum Erreichen des unteren Unterdruckschwellwerts der Zähler aufwärtszählt und dementsprechend seine Ausgangskonfiguration (Q0 bis Q3) im Sinne einer ansteigenden Steuerspannung für die Phasenanschnitt-Steuerschaltung (19a) verändert.

9. Vorrichtung nach einem der Ansprüche 1 bis 8, dadurch gekennzeichnet, daß durch den geschlossenen ersten Druckschalter (S1) der Aufwärts/Abwärtszähler (17a) auf Abwärtszählen vorbereitet und gleichzeitig die astabile Schwingschaltung (24) durch Sperren ihres vorgeschalteten Ex-NOR-Gatters (22) gestoppt ist derart, daß bei Erreichen des oberen Unterdruckschwellwerts (Pu2) und Ansprechen des zweiten Unterdruckschalters (S2) die astabile Schwingschaltung (24) wieder anspringt und durch das Abwärtszählen des Zählers (17a) monoton fallend auf ein niedrigeres Leistungsniveau des Gebläseantriebsmotors (20) eingestellt wird, bis der für den oberen Unterdruckschwellwert (Pu2) maßgebende Unterdruckschalter (S2) wieder öffnet und der Gebläseantriebsmotor auf dem zuletzt eingestellten Leistungsplateau verbleibt, bis sich in den Unterdruckschaltern ein erneuter Schaltpositionswechsel ergibt.

10. Vorrichtung nach einem der Ansprüche 1 bis 9, dadurch gekennzeichnet, daß die Ausgänge (Q0 bis Q3) des Aufwärts/Abwärtszählers (17a) mit einer Dekodier- Widerstandskombination (R1, R2, R3, R4) verbunden ist, deren andere Anschlüsse einen gemeinsamen Schaltungspunkt (P3) bilden, der mit dem Steuereingang (E1) der Phasenanschnitt-Steuerschaltung (19a) verbunden ist.

11. Vorrichtung nach Anspruch 10, dadurch gekennzeichnet, daß die Phasenanschnitt-Steuerschaltung ein IC-Baustein ist, der auf das Steuergate eines mit dem Gebläseantriebsmotor (20) in Reihe geschalteten Triac (27) arbeitet.

12. Vorrichtung nach einem der Ansprüche 1 bis 11, dadurch gekennzeichnet, daß die astabile Schwingschaltung (24) aus der Reihenschaltung zweier NOR-Gatter (24a, 24b) besteht, die über einen Kondensator (25) rückgekoppelt ist und einen Einstellwiderstand (26) aufweist zur Frequenzbestimmung.

13. Vorrichtung nach einem der Ansprüche 1 bis 12, dadurch gekennzeichnet, daß die Ausgänge des Aufwärts/Abwärtszählers mit einer Verriegelungsschaltung (21) verbunden sind, die über Erreichen eines oberen Leistungsgrenzwerts für den Gebläseantriebsmotor entsprechend einer vorgegebenen Ausgangskonfiguration des Zählers den weiteren Zählvorgang unterbricht.

14. Vorrichtung nach einem der Ansprüche 1 bis 13, dadurch gekennzeichnet, daß eine Rückstellschaltung (29) vorgesehen ist, die bei Erreichen eines unteren Leistungsgrenzwertes des Gebläseantriebsmotors (20) entsprechend einer vorgegebenen Ausgangskonfiguration (Nullwert) des Zählers (17a) ein Überspringen auf einen maximalen Zählerstand durch kontinuierliches Rücksetzen bei jedem neu eingehenden Zählimpuls verhindert.

15. Vorrichtung nach Anspruch 13, dadurch gekennzeichnet, daß die Verriegelungsschaltung (21) eine Diodenkombination (28) umfaßt, deren Ausgang ein parallel zu einem der Unterdruckschalter (S1, S2) geschaltetes Halbleiterschaltelement ansteuert.

16. Vorrichtung nach Anspruch 15, dadurch gekennzeichnet, daß parallel zu den Anschlüssen des ersten, auf einen unteren Unterdruckschwellwert ansprechenden Schalters (S1) ein Transistor (29) geschaltet ist, der dann leitend gesteuert ist, wenn sich an den Ausgängen des Zählers (17a) eine über die Verriegelungsdioden (28) erfaßte, der maximalen vom Gebläseantriebsmotor abgegebenen Leistung entsprechende Konfiguration ergibt derart, daß die Verriegelungsschaltung (21) eine aufgrund der tatsächlichen Unterdruckverhältnisse nicht erfolgte Schaltbewegung des ersten Unterdruckschalters (S1) vorgibt.

17. Vorrichtung nach Anspruch 3, dadurch gekennzeichnet, daß der Ausgang des Speicherkondensators (C), gegebenenfalls nach Verstärkung, mit dem Eingang einer nachgeschalteten Phasenanschnitt-Leistungssteuerschaltung (19a) verbunden ist, die im kontinuierlichen Übergang je nach dem zugeführten Speicherkondensator-Spannungssignal den in Reihe mit dem Gebläseantriebsmotor liegenden Triac (27') kontinuierlich
und unter Einschluß von Phasen konstanter Leistungsabgabe, durchsteuert.

18. Vorrichtung nach Anspruch 17, dadurch gekennzeichnet, daß zwischen dem Ausgang des Speicherkondensators und dem Eingang der Phasenanschnitt-Steuerschaltung (19a') eine manuell
betätigbare Schalterkombination (33) angeordnet ist, die neben einer ersten Schaltstellung (Auto) für die automatische Ansteuerung mindestens
zwei weitere manuell einsteuerbare Leistungsabgabestufen (max-Stufe; min-Stufe) durch Schalterumschaltungen ermöglicht.

**Claims**

1. A device for automatically controlling the suction
   power of a vacuum cleaner, the fan of which is
   driven by an electric motor with assigned electric
   or electronic drive circuit, with a dust vessel (dust
   bag) and with (membrane-controlled) vacuum
   switches which respond to the level of the vacuum generated by the fan and which are adjusted to different vacuum response threshold values
   and act on the drive circuit, characterised in that
   only two vacuum switches (S1, S2; S1', S2') are
   provided, which in respect of their switching characteristics are linked to one another and to the following drive circuit in such manner that below a
   first vacuum threshold value (Pu1 - both switches
   open) the drive circuit adjusts the fan drive motor
   to increasing power output, at an actual value falling between the two vacuum threshold values
   (Pu1; Pu2) (one of the switches closed) adjusts
   said fan drive motor to a constant power level and
   in the event of the overshooting also of the second vacuum threshold value (Pu2) adjusts said
   fan drive motor to a reducing power output,
   wherein the vacuum switches (S1, S2; S1', S2')
   are connected at their output end to a memory
   (counter 17a; capacitor C), the instantaneous output value of which, which is co-defined by the previous switching states of the vacuum switches,
   predetermines the current respective power output of the fan motor (20, 20').

2. A device as claimed in Claim 1, characterised in
   that the memory is a counting circuit (17), the respective finely stepped output count of which defines the driving power level of the fan drive motor
   (20), where different switching states of the two
   vacuum switches (S1, S2) define the upwards
   and downwards counting directions of the counter
   (17a) in a logic-link which is such that when the
   actual value moves between the two vacuum response threshold values (Pu1, Pu2), the fan drive
motor operates at a constant power level.

3. A device as claimed in Claim 1, characterised in
   that the store is a capacitor (C) which is charged
   by a preceding charging circuit (34), which is connected to the vacuum switches (S1', S2') when
   the vacuum switches (S1', S2') are open, and
   which is maintained at a constant output voltage
   in the case of an actual value moving between the
   two vacuum response threshold values (one of
   the switches closed), and which is discharged via
   a discharging circuit (R13, R14; S2') when the
   second vacuum switch (S2') is closed.

4. A device as claimed in Claim 1 or 2, characterised
   in that the two vacuum switches (S1, S2) act on
   a following, astable oscillating circuit (24) in such
   manner that in the case of identical switching
   states of the vacuum switches (S1, S2) the said
   oscillating circuit assumes a first operating state
   and in the case of different switching states it assumes a second operating state.

5. A device as claimed in Claim 4, characterised in
   that the astable oscillating circuit (24) acts on the
   counting input (ZE) of the upwards/downwards
   counter (17a).

6. A device as claimed in one of Claims 1 to 5, characterised in that the switching states at the outputs (Q0 to Q3) of the upwards/downwards counter (17a) are logic-linked to one another in such
   manner that depending upon the counting direction (upwards/downwards) of the counter (17a) a
   drive signal is produced which rises or falls in
   finely stepped monotonous fashion and which is
   supplied to the control input of a following phase
   control circuit for the fan drive motor (20).

7. A device as claimed in one of Claims 1 to 6, characterised in that the two switches are make contacts which are activated when specified, predetermined vacuum threshold values are reached,
   where the first vacuum switch (S1), which responds in the case of a lower vacuum (Pu1), simultaneously defines the counting direction of
   the upwards/downwards counter (17a).

8. A device as claimed in one of Claims 1 to 7, characterised in that the vacuum switches (S1, S2)
   are connected in series with resistors (23a, 23b)
   which are connected to the supply voltage (+Uv)
   and the connection points (P1, P2, P2') of the vacuum switches to the series resistors are connected to the inputs of the drive gate circuit (Ex-
   NOR-gate 22) for the astable oscillating circuit
   (24), where the first switch (S1) defines the upwards counting direction of the counter (17a) in the open state and defines the downwards counting direction of the counter (17a) in the closed state, in such manner that until the lower vacuum threshold value is reached the counter counts upwards and accordingly changes its output configuration (Q0 to Q3) in accordance with a rising control voltage for the phase control circuit (19a).

9. A device as claimed in one of Claims 1 to 8, characterised in that by means of the closed first vacuum switch (S1) the upwards/downwards counter (17a) is prepared for downwards counting and at the same time the astable oscillating circuit (24) is stopped by the disabling of the Ex-NOR-gate (22) connected to its input end, in such manner that when the upper vacuum threshold value (Pu2) is reached and on the response of the second vacuum switch (S2), the astable oscillating circuit (24) starts up again and by the downwards counting of the counter (17a) is adjusted in monotonously falling fashion to a lower power level of the fan drive motor (20) until the vacuum switch (S2), which governs the lower vacuum threshold value (Pu2), opens again and the fan drive motor remains at the last set power level until a new switching position change occurs in the vacuum switches.

10. A device as claimed in one of Claims 1 to 9, characterised in that the outputs (Q0 to Q3) of the upwards/downwards counter (17a) are connected to a decoding resistor combination (R1, R2, R3, R4), the other terminals of which form a common circuit point (P3) which is connected to the control input (E1) of the phase control circuit (19a).

11. A device as claimed in Claim 10, characterised in that the phase control circuit is an IC module which acts on the control gate of a triac (27) connected in series with the fan drive motor (20).

12. A device as claimed in one of Claims 1 to 11, characterised in that the astable oscillating circuit (24) consists of the series arrangement of two NOR-gates (24a, 24b), which is fed-back via a capacitor (25) and comprises an adjusting resistor (26) for the frequency definition.

13. A device as claimed in one of Claims 1 to 12, characterised in that the outputs of the upwards/downwards counter are connected to a locking circuit (21) which, when an upper power limit value is reached for the fan drive motor in accordance with a predetermined output configuration of the counter, interrupts the continued counting process.

14. A device as claimed in one of Claims 1 to 13, characterised in that a resetting circuit (29) is provided which, when a lower power limit value is reached for the fan drive motor (20) in accordance with a predetermined output configuration (zero value) of the counter (17a), prevents a jump to a maximum count by continuous resetting with each newly incoming counting pulse.

15. A device as claimed in Claim 13, characterised in that the locking circuit (21) comprises a diode combination (28), the output of which drives a semiconductor switching element connected in parallel to one of the vacuum switches (S1, S2).

16. A device as claimed in Claim 15, characterised in that a transistor (29) is connected in parallel to the terminals of the first switch (S1), which responds to a lower vacuum threshold value, which transistor (29) is driven conductive when a configuration detected via the locking diodes (28) and corresponding to the maximum power output by the fan drive motor occurs at the outputs of the counter (17a), in such manner that the locking circuit (21) predetermines a switching movement of the first vacuum switch (S1) which has not taken place due to the actual vacuum conditions.

17. A device as claimed in Claim 3, characterised in that the output of the storage capacitor (C), optionally after amplification, is connected to the input of a following phase control circuit (19a) which, in continuous transition, in accordance with the supplied storage capacitor voltage signal, turns on the triac (27'), which is arranged in series with the fan drive motor, continuously and including phases of constant power output.

18. A device as claimed in Claim 17, characterised in that a manually operable switch combination (33) is arranged between the output of the storage capacitor and the input of the phase control circuit (19a'), which switch combination (33) facilitates not only a first switching position (auto) for automatic driving, but at least two further manually actuatable power output stages (max-stage; min-stage) by the reversal of switches.

**Revendications**

1. Dispositif de commande automatique de la puissance d'un aspirateur dont la machine soufflante est entraînée par un moteur électrique équipé d'un circuit de commande de démarrage électrique ou électronique avec un récipient à poussière (sac à poussière) et avec des commutateurs de dépression (commandés par membrane) en fonction de la dépression engendrée par la machine soufflante, ces commutateurs étant réglés sur des seuils de dépression de commande, différents et coopérant avec le circuit de commande, dispositif caractérisé en ce qu'il comporte seulement deux commutateurs à dépression (S1, S2 ; S1', S2') et dont les comportements en commutation et le circuit de commande en aval sont combinés pour qu'en-dessous d'un premier seuil de dépression (Pu1 - les deux commutateurs sont ouverts), le circuit de commande agit sur le moteur d'entraînement de la machine soufflante pour augmenter sa puissance, pour qu'à une valeur réelle comprise entre les deux seuils de dépression (Pu1, Pu2) (l'un des commutateurs est ouvert) on reste sur un palier de puissance constant et qu'en cas de dépassement également du second commutateur à seuil de dépression (Pu2), on règle sur une puissance allant en diminuant, les commutateurs à dépression (S1, S2 ; S1', S2') étant suivis d'une mémoire (compteur 17a ; condensateur C) dont la valeur de sortie instantanée prédéterminée à partir des états de commutation précédents des commutateurs à dépression détermine la puissance instantanée fournie par le moteur (20, 20') de la machine soufflante.

2. Dispositif selon la revendication 1, caractérisé en ce que la mémoire est un compteur (17) dont l'état de comptage de sortie à échelon fin défini du niveau de puissance de commande du moteur (20) entraînant la machine soufflante et des états de commutation différents des deux commutateurs à dépression (S1, S2) définissant le mode de comptage ou de décomptage du compteur (17a) dans une combinaison telle que lorsque la valeur réelle se trouve entre les deux valeurs de seuil de sollicitation ou de dépression (Pu1, Pu2), le moteur travaille à un palier de puissance constant.

3. Dispositif selon la revendication 1, caractérisé en ce que la mémoire est un condensateur (C) qui est chargé par un circuit de charge (34) prédéterminé, relié aux commutateurs à dépression (S1', S2'), les commutateurs à dépression (S1', S2') étant ouverts, et pour une valeur réelle qui se déplace entre les deux seuils de sollicitation en dépression (l'un des commutateurs est fermé), le signal est maintenu à une tension de sortie constante et lorsque le second commutateur à dépression (S2') est fermé, le condensateur se décharge par un circuit de décharge (R13, R14, S2').

4. Dispositif selon la revendication 1 ou 2, caractérisé en ce que les deux commutateurs à dépression (S1, S2) coopèrent avec un circuit oscillant, astable en aval (24) pour qu'à des états de commutation de même sens des commutateurs à dépression (S1, S2), on passe dans un premier état de fonctionnement et pour des états de commutation différents, on passe dans un second état de fonctionnement.

5. Dispositif selon la revendication 4, caractérisé en ce que le circuit oscillant astable (24) agit sur l'entrée de comptage (ZE) du compteur/décompteur (17a).

6. Dispositif selon l'une des revendications 1 à 5, caractérisé en ce que les états de commutation aux sorties (Q0-Q3) du compteur/décompteur (17a) sont combinés pour que suivant le sens de comptage (mode comptage/mode décomptage) du compteur (17a), on obtienne un signal de commande croissant ou décroissant de manière monotone à échelonnement fin, et qui est fourni à l'entrée de commande d'un circuit de commande à découpage de phase, en aval pour le moteur d'entraînement (20) de la machine soufflante.

7. Dispositif selon l'une des revendications 1 à 6, caractérisé en ce que les deux commutateurs sont des commutateurs activés dans le sens de la fermeture lorsqu'ils atteignent des valeurs de seuil de dépression, prédéterminées, le premier commutateur à dépression (S1) mis en oeuvre à la dépression la plus faible (Pu1) définissant en même temps le sens de comptage du compteur/décompteur (17a).

8. Dispositif selon l'une des revendications 1 à 7, caractérisé en ce que les commutateurs à dépression (S1, S2) sont branchés en série sur des résistances (23a, 23b) reliées à la tension d'alimentation (+Uv) et les points de jonction (P1, P2, P2') des commutateurs à dépression étant reliés par des résistances en série aux entrées de porte de commande (porte Ex-NOR 22) pour le circuit oscillant astable (24), le premier commutateur (S1) à l'état ouvert définissant le mode de comptage et à l'état fermé, le mode de décomptage du compteur (17a) de façon que lorsqu'on atteint le seuil de dépression inférieur, le compteur passe en mode de comptage et modifie de façon correspondante sa configuration de sortie (Q0-Q3) dans le sens d'une tension de commande croissante pour le découpage de phase du circuit de commande (19a).

9. Dispositif selon l'une des revendications 1 à 8, caractérisé en ce que le premier commutateur de pression (S1), fermé, prépare le compteur/décompteur (17a) pour le fonctionnement en mode décompteur et arrête en même temps le circuit oscillant astable (24) en bloquant sa porte Ex-NOR, en amont, et lorsque l'on atteint le seuil de dépression (Pu2) supérieur et que le second commutateur à dépression (S2) est mis en oeuvre, le circuit oscillant astable (24) se remet à fonctionner et le décomptage du compteur (17a) descend de manière monotone à un niveau de puissance plus faible pour le moteur (20) entraînant la machine soufflante, jusqu'à ce que le commutateur de dépression (S2) déterminant pour la valeur de dépression inférieure (Pu2) s'ouvre de nouveau et que le moteur de la machine soufflante reste au palier de puissance réglé en dernier lieu, jusqu'à ce que dans les commutateurs à dépression, on obtienne un nouveau changement de position de commutation.

10. Dispositif selon l'une des revendications 1 à 9, caractérisé en ce que les sorties (Q0-Q3) du compteur/décompteur (17a) sont reliées à une combinaison de résistances (R2, R2, R3, R4) dont les bornes forment un point de commutation commun (P3) relié à l'entrée de commande (E1) du circuit de commande de découpage de phase (19a).

11. Dispositif selon la revendication 10, caractérisé en ce que le circuit de commande à découpage de phase est un composant en circuit intégré (IC) qui travaille et coopère avec un triac (27) branché en série sur le moteur d'entraînement de commande (20).

12. Dispositif selon l'une des revendications 1 à 11, caractérisé en ce que le circuit oscillant astable (24) se compose du montage en série de deux portes NOR (24a, 24b) couplées en réaction par un condensateur (25) et comportant une résistance de réglage (26) pour déterminer la fréquence.

13. Dispositif selon l'une des revendications 1 à 12, caractérisé en ce que les sorties du compteur/décompteur sont reliées à un circuit de verrouillage (21) qui, lorsqu'on atteint la limite de puissance supérieure du moteur d'entraînement de la machine soufflante coupe la suite de l'opération de comptage en fonction d'une configuration de sortie prédéterminée des compteurs.

14. Dispositif selon l'une des revendications 1 à 13, caractérisé par un circuit de remise à l'état initial (29) qui, lorsqu'il atteint une valeur de limite de puissance inférieure du moteur de la machine soufflante (20) évite en fonction d'une configuration de sortie prédéterminée (valeur zéro) du compteur (17a), un passage brusque à un état de comptage maximum grâce à une remise à l'état initial continu pour chaque nouvelle impulsion de comptage qui arrive.

15. Dispositif selon la revendication 13, caractérisé en ce que le circuit de verrouillage (21) comprend une combinaison de diodes (28) dont la sortie commande un élément semi-conducteur parallèle à l'un des commutateurs à dépression (S1, S2).

16. Dispositif selon la revendication 15, caractérisé en ce qu'en parallèle aux bornes du premier commutateur (S1) mis en oeuvre par une valeur de seuil de dépression inférieure commandant un transistor (21) qui devient conducteur lorsque sur les sorties du compteur (17a), il détecte une configuration correspondant à la puissance maximale fournie par le moteur d'entraînement de la machine soufflante, et qui est détectée par l'intermédiaire des diodes de verrouillage (28) de façon que le circuit de verrouillage (21) prédétermine un mouvement de commutation du premier commutateur à dépression (S1) qui ne s'est pas produit pour les conditions réelles de dépression.

17. Dispositif selon la revendication 3, caractérisé en ce que la sortie du condensateur de mémoire (C) est reliée le cas échéant après amplification à l'entrée d'un circuit de commande de puissance à découpage de phase (19a) en aval qui commande la transition en continu suivant le signal de tension du condensateur accumulateur, fourni, au triac (27') en série sur le moteur d'entraînement de la machine soufflante et avec intégration de phase d'émission de puissance constante.

18. Dispositif selon la revendication 17, caractérisé en ce qu'entre la sortie du condensateur de mémoire et l'entrée du circuit de commande de découpage (19a'), il y a une combinaison de commutateurs (33) à commande manuelle qui, à côté d'une première position de commutation (automatique) pour la commande automatique permet au moins un second niveau d'émission de puissance réglé également manuellement (niveau maximum ; niveau minimum) par des inversions de commutateur.

Fig.1

Fig.2

# Fig.3

N/Watt

1200

750

II

200

t₁(S1g)  t₂(S2g)  t₄(S1g)  t₆(S1g)

t₃(S2a,S1a)  t₅(S1a,S2a)

t

EP 0 379 680 B1

Fig.4

EP 0 379 680 B1

# Fig.5

R11 R10 P' 30 D1 R12 R15 R14 R13 31 S1' S2' 34 14'

33a 33 33b 33c auto max min

27' 19'a

20'

EP 0 379 680 B1